# EUROPEAN PATENT APPLICATION

(11) **EP 1 205 113 A1**
(43) Date of publication of application: **15.05.2002**
(21) Application number: 00203954.3
(22) Date of filing: 10.11.2000
(51) Int. Cl.: A23D 7/00, A23L 1/22

(54) **Edible fat based products**

(71) Applicant: UNILEVER N.V., 3013 AL Rotterdam (NL)
(72) Inventor: Flöter, Eckhard, 3133 AT Vlaardingen (NL)
(74) Representative: Sikken, Antonius H. J. M.

(57) **Abstract**

Edible fat product consisting of a dispersion comprising a continuous fat phase, 10 to 90 wt.% of a dispersed aqueous phase and fatty acid monoglycerides. The fat phase structuring amount of fatty acid monoglycerides calculated on fat phase is 1.5 - 15 wt.%, while the amount of a structuring triglyceride fat calculated on fat phase can be reduced to 1 wt.% or less.

## Description

### TECHNICAL FIELD

The present invention deals with a process for the preparation of edible fat products which contain no or little structuring triglyceride fat. The fat product consists of a continuous fat phase and a dispersed phase which is an aqueous phase (water-in-oil emulsion) or a cooking ingredient.

### BACKGROUND AND PRIOR ART

Emulsion spreads which are mainly used for buttering bread and kitchen applications usually consist of a dispersion of an aqueous phase in a fat phase. The best known spread is margarine which contains 20 wt.% of a dispersed aqueous phase. Some low fat spreads contain even 80 wt.% of a dispersed aqueous phase.

The fat phase of most fat products presently consists of a vegetable fat. This fat phase contains typically a liquid portion derived from seed oils and a structuring portion, the so-called hardstock. It is desirable to maximise the liquid fraction within the fat phase in order to improve the nutritional value of the fat phase. The main reason is that the liquid seed oils used are rich in unsaturated fatty acids while the hardstock fraction is characterised by its high level of saturated fatty acids. The optimal mix of these two fractions should yield a sufficiently structured and stable product with good nutritional properties.

Present manufacturing processes for plastic edible fat products emulsions in many cases involve 10 to 30 wt.% of a structuring triglyceride fat. The lower limit of this range is dictated by the necessary stability of the products against oil and water separation. Within the range the level of hardstock is decided upon dependent on the desired product structure. Reduction of the structuring fat content is beneficial, because the fat is expensive and contains relatively much saturated fatty acids which have to be avoided from a nutritional point of view. An amount of 8 wt.% appears to be the minimum necessary for properly structuring the liquid oil.

Glyceride monoesters of fatty acids often have been present in spread compositions as emulsifier, but hardly ever in amounts over 1 wt.% and in that case generally accompanied with at least 10 wt.% of structuring triglyceride fat.

In DE 29 35 572 a dietary spread is described containing monoglycerides of essential fatty acids and medium chain triglycerides as the fat phase. The monoglycerides are present in an amount of 10 to 100 % of the total fat content. The monoglycerides are added for dietary purposes only to allow for uptake of essential fatty acid by patients suffering from fat maldigestion. It is further described that di- or triacylglycerides of long-chain fatty acids (C16 and longer) are essentially absent. This spread contains a high amount of monoglyceride which will result in an undesirable taste and mouthfeel.

US 2,754,213 discloses a process involving post manufacture tempering (3 to 48 hours at 90 to 140 °F) to control the manipulation of structure of 100 % fat spreads and shortenings. An essential feature of this invention is the presence of phosphatide ingredients and rather pure monoglycerides at levels of more than 9% in substantial absence of diglyderides (less than 8% of the amount of monoglycerides).

JP 57 180496 discloses that the addition of more than 5 %, preferably more than 10 % of a fatty acid monoglyceride to a hot vegetable (waste) oil leads to a gelled and finally solidified fat when cooled to room temperature. The thus solidified waste oil can be thrown away or incinerated. Also this invention is not concerned with an emulsion or phases dispersed in the fat matrix.

WO 00/40095 also describes a food spread comprising a mixture of an edible oil and a monoglyceride. In particular the absence of water is disclosed. It is stated that with the addition of water no food spread can be formed. The products of this application are prepared by slowly cooling the fatty mixture to ambient temperature without any specific application of shear. The monoglycerides are either derived from oleic acid or palmitic acid.

### SUMMARY OF THE INVENTION

We have found that the amount of structuring triglyceride fat in a plastic fat product with a dispersed (aqueous) phase comprising liquid oils can be reduced to levels as low as 0 - 1 wt.% provided fatty acid monoglycerides are present in an amount of 1.5 - 15 wt.%.

The invention provides an edible fat product consisting of a dispersion which comprises a continuous fat phase, 10 to 90 wt.% of a dispersed phase and fatty acid monoglycerides, characterized in that the amount of fatty acid monoglycerides calculated on fat phase is 1.5 - 15 wt.%, with the proviso that the fat product contains less than 7 wt.% calculated on fat phase, of structuring triglycerides.

### DETAILS OF THE INVENTION

The continuous fat phase of the product comprises a liquid oil, which can be any oil suitable for fat product manufacturing. With liquid oil, not only a single natural oil is meant, but also mixtures thereof. In particular, the liquid oil is chosen from the group consisting of sunflowerseed oil, groundnut oil, mustard oil, safflower oil, sesame oil, corn oil, soybean oil, rapeseed oil, cottonseed oil, linseed oil and olive oil or a mixture thereof. The liquid oil is present in an amount of 10 to 90 wt.% based on the total composition.

Fatty acid monoglycerides consist of glycerol esterified with a single fatty acid. According to the invention the fatty acid is chosen from the group consisting of saturated fatty acids, such as behenic, archidic, stearic, palmitic, myristic and lauric acid or unsaturated fatty acids such as oleic, linoleic, linolenic and erucic acid and alike. Also a mixture of monoglycerides of different fatty acids can be used.

The characteristics of the structure generated by the monoglycerides is not only depending on the amount of monoglycerides used but also on the type of monoglycerides. For high viscosity and plastic like spread structures preferably monoglycerides or monoglyceride mixtures with a high degree of saturation are used. Preferentially, monoglycerides are used which are derived from palm oil, palm oil fractions, palm kernel fat, coconut fat, lard, tallow, partially or fully hardened vegetable oils. Such fatty acid monoglycerides are preferably rich in stearic and/or palmitic acid, which means at least 40%, preferably at least 60% of the monoglycerides is built up from either palmitic or stearic acid.

The fatty acid monoglycerides can be prepared by interesterification of fats and oils with glycerol also referred to as glycerolysis (see The Lipid Handbook, 2^{nd} Ed. (1994), F.D. Gunstone et al., published by Chapman & Hall, London, page 296-297). The monoglycerides as a product of the glycerolysis may be applied directly (without further purification) and thus containing up to 50% of other products from the glycerolysis process, such as diglycerides. Preferably these monoglyceride products contain at least 40 % monoglycerides. The monoglycerides can also be in the form of distilled monoglycerides which indicates a purity level of 90 %. However, the total amount of monoglycerides, based on the pure substances, should be within the ranges indicated above. The fatty acid monoglycerides can also be obtained enzymatically or via acidolysis.

The amount of fatty acid monoglyceride calculated on fat phase, preferably is 2 to 10 wt.%, more preferably 3 to 9 wt.%.

The dispersed phase according to the invention can be an aqueous phase, thus resulting in a water-in-oil emulsion. The dispersed phase can also be a fat insoluble solid phase such as a dispersion of a cooking ingredient in a fat phase.

The product according to the invention is beneficial because the use of monoglycerides as structuring agent allows to create structures stable against separation of water and oil without implying an increased solids content which is accompanied by an increased viscosity. The lower level wt.% of monoglycerides necessary to stabilise a water in oil emulsion results in a nutritionally beneficial composition of the formulation because a significant reduction of the level of saturated fatty acids can be achieved. The level of saturated fatty acids has the known implications for blood cholesterol level and the resulting risk for cardiovascular diseases. Further it is beneficial that the combination of the monoglyceride structured fat phase and a dispersed aqueous phase allow to reduce the fat intake per serving and is as such qualify for dietary purposes.

In contrast to triglyceride structures, the texture attributes of the structures stabilized by monoglycerides can be varied significantly. These structures vary from almost liquids, via smooth Vaseline-like pastes to crumbly lard or Ghee like textures. Additionally, it is found that for products stabilised by monoglycerides the temperature sensitivity can be fairly improved compared to triglyceride structured fat based products.

Optionally, the fat phase contains a structuring triglyceride fat. However, with the monoglycerides as structuring agent, the amount of additionally added structuring triglyceride fat is limited to less than 7 wt.%, preferably less than 5 wt % and most preferentially less than 2% calculated on fat phase. In particular the amount of structuring triglycerides is less than the monoglyceride fraction. It is believed that with the use of the fatty acid monoglycerides of the invention, the amount of structuring triglyceride fats can even be reduced to 1 wt.% or less, calculated on fat phase, and this is most preferred.

Structuring triglyceride fats are defined as triglycerides of the triglyceridestructure SSS, SSU and SUS, wherein S stands for a saturated fatty acid residue with a chain length of 12 to 24 carbon atoms and U stands for an unsaturated fatty acid residue with a chain length of 18 to 24 carbon atoms. Triglyceride fats containing these triglycerides are:
palm oil, palm oil fractions, palm kernel fat, coconut fat, partially or fully hardened fat or fat fractions, interesterified mixtures of fats such as an interesterified palm oil/palm kernel oil fat mixture.

As described above, according to one aspect of the invention the dispersed phase is an aqueous phase and the fat product is a water-in-oil emulsion. In such a water-in-oil emulsion the droplet size of the aqueous phase is preferably less than 20 µm, more preferably less than 15 µm. The droplet size in terms of D3.3 is determined by NMR techniques or optical methods known to those skilled in the art.

Examples of such products are spreads or liquid margarine. They can further contain conventional spread components, such as emulsifiers (other than monoglycerides), such as lecithin, anti-oxidants, flavours, colouring agents, vitamins, salt, proteins, gelling and thickening agents, water soluble ingredients with specific health benefits etc.

The present invention also relates to a process for preparing the water-in-oil emulsions which comprises forming an emulsion of the liquid oil, monoglycerides and aqueous phase at elevated temperatures, e.g., 80 °C, so that all lipid phase ingredients dissolve, and cooling the emulsion under sheared conditions. The sheared conditions are preferably such that a droplet size of less than 20 µm is obtained. Such conditions can be obtained using a scraped surface heat exchanger. The shearing or vigorous stirring is in particular necessary to avoid excessive droplet coalescence and support of the crystallization process. As such its variation allows for manipulation of the product structure, as is obvious to those skilled in the art, without jeopardizing product stability.

According to another aspect of the invention the dispersed phase is a cooking ingredient. Preferably the cooking ingredient is a fat insoluble ingredient, in particular selected from flour, herbs, garlic, olives, peppers or onion. The products obtained are stable, which means that substantially no sedimentation of the cooking ingredient over time occurs. The term 'stable against sedimentation' indicates that the gravity driven movements of the dispersed phase result in a top- or bottom layer of pure continuous phase with a thickness of less than 10% of the total sample height after 6 weeks of storage at 15 °C.

Fat products containing a cooking ingredient can be prepared by mixing fat phase and monoglycerides at a temperature at which all components dissolve to obtain a clear fat phase, cooling the obtained fat phase under sheared conditions, wherein prior, during or after the cooling process the dispersed phase is added to the fat phase. If the dispersed phase is admixed to the fat phase during the course of or subsequently to the cooling process, sufficient shear for dispersion should be supplied. The cooking ingredients can also be incorporated in an aqueous phase to create a water-in-oil emulsion. The ratio cooking ingredient to water is preferably between 1:9 to 9:1. In that case more than a single dispersed phase is embedded into the fat matrix, e.g., an aqueous phase next to a cooking ingredient.

### EXAMPLES

The following examples illustrate the invention.

### Example 1

A table (60 % fat) spread was manufactured from a fat phase consisting of 93 w/w% of sunflower oil and 7 w/w% of commercially available non-distilled monoglycerides based on palm oil fatty acids. The monoglyceride content in this commercial product is approximately 60%. The fat phase was prepared by heating the sunflower oil contained in a glass beaker up to 80 °C. Subsequently the monoglyceride phase was dissolved while stirring the sunflower oil gently. After the monoglyceride was completely dissolved demineralised water was added to the system until a content of 40 w/w% aqueous phase was achieved. During this process the temperature was kept constant at 75 °C for 5 minutes. The obtained water in oil emulsion was processed via a bench scale scraped surface heat exchanger unit typical for margarine processing. The processing conditions were 700 scrapings per minute at a throughput of 6.5 kg per hour. The cooling was applied such that an outlet temperature between 3 and 7 °C could be maintained. The fabricated semisolid emulsion was filled in to 100g plastic tubs. The samples freshly produced were initially, for 2 hours, stored at 5 °C. After this initial cold storage the samples were subjected to different temperatures (5 °C, 15 °C, 25 °C).

The products were characterized by means of a Stevens texture profile analyser (probehead 6.35), an expert panel judging product appearance and spreadibility, and measurements of water droplet size distribution (D.3.3) by means of pulse NMR.

The structure measurement with the Stevens equipment was performed according to the following parameters: penetration depth 10 mm, penetration speed 2 mm per second. The given data are the average over a series of measurements.

The droplet size measurements (D3.3) by pulse NMR were performed by standard routines supplied by the manufacturer, Brucker Instruments.

The panel assessed after 1 and 3 weeks the products to be of excellent structure and good spreadibility. The mouthfeel was comparable to typical spreads products. In terms of appearance the products were rated homogeneous as no oil or water separation were found at any of the storage temperatures. The structure is described as smooth and soft. The physical measurements give values of droplet size of 10.2, 11.8, and 15.1 micrometers at respectively 5 °C, 15 °C, and 25 °C as storage temperature. The product hardness in terms of Stevens analysis 6.35 was 131 g, 72 g, and 15 g at the respective temperatures of 5, 15 and 25 degree Celsius. In longer term storage (8 weeks) the products did neither increase in terms of product hardness nor did they decrease.

### Example 2

The same fat phase formulation as used in example 1 was used again. Now the admixture of the prepared fat phase by mineralised water was stopped when a level of 20% w/w of water on product was achieved. The same processes as applied in example 1 were applied and the products were again after filling into tubs initially stored at 5 °C. Assessment of the products was again following the lines as described above.

Also for this higher (80%) fat product the ratings of the expert panel were positive with respect to appearance, structure and spreadibility. The products as described did over a period of eight weeks not suffer from exudation of oil or water. An abuse test, cycling the products to temperatures of 35 °C for 2 days and subjecting them subsequently to their original storage temperature did not result in any significant changes of the product properties.

The physical characterisation yielded the following values:
Stevens hardness 6.35:151 g at 5 °C, 74 g at 15 °C, 38 g at 25 °C.

### Example 3

A table 70 % fat spread was manufactured from a fat phase consisting of 91 w/w% of soy bean oil and 9 w/w% of commercially available distilled monoglycerides based on fully hardened palm oil fatty acids. The monoglyceride content in this commercial product is higher than 90%. The fat phase was prepared by heating the soy bean oil contained in glass beaker up to 80 °C. Subsequently the monoglyceride phase was dissolved while stirring the soy bean oil gently. After the monoglyceride was completely dissolved demineralised water was added to the system until a content of 30 w/w% aqueous phase was achieved. During this process the temperature was kept constant at 78 °C for 10 minutes. The obtained water-in-oil emulsion was processed via a bench scale scraped surface heat exchanger unit typical for margarine processing. The processing conditions were 700 scrapings per minutes at a throughput of 6,5 kg per hour. The cooling was applied such that an outlet temperature between 3 and 7 °C could be maintained. The obtained semisolid emulsion was filled into 100 g plastic tubs. The samples freshly produced were initially, for 2 hours, stored at 5 °C. After this initial cold storage the samples were subjected to different temperatures (5 °C, 15 °C, 25 °C).

The products were characterized by means of a Stevens texture profile analyser (probehead 6.35), an expert panel judging product appearance and spreadibility and measurements of water droplet size distribution by means of pulse NMR.

The panel assessed after 1 and 3 weeks the products to be of excellent structure and good spreadibility. The mouthfeel was comparable to typical spread products. In terms of appearance the products were rated homogeneous as no oil or water separation were found at any of the storage temperatures. The structure is described as smooth and soft. The physical measurements give values of droplet size of 13.9, 14.5, and 15.3 micrometers at respectively 5 °C, 15 °C, and 25 °C as storage temperature. The product hardness in terms of Stevens analysis 6.35 was 71g, 48 g, and 33 g at the respective temperatures of 5 °C, 15 °C, and 25 °C. In longer term storage (8 weeks) the products did neither increase in terms of product hardness nor did they decrease.

### Example 4

Two liquid like fat based products A and B were manufactured. These 60% fat products are characterised by a low viscosity which makes these products pourable or squeezeable product instead of a traditional tub spread. In both products the stabilization of the products is achieved through the addition of distilled fatty acid monoglycerides. The fatty acids of the monoglycerides are derived from fully hardened palm oil and are present at a purity of at least 90 % in the monoglyceride phase. Product A contains of 59 w/w % sunflower oil, 1 w/w % of the distilled monoglyceride phase and 40 % w/w of tap water. This relates to a monoglyceride concentration of 1.7 w/w % on fat. Product B contains of 57 w/w % sunflower oil, 3 w/w % of the distilled monoglyceride phase and 40 % w/w of tap water. This relates to a monoglyceride concentration of 5 % w/w on fat phase.

The preparation procedure mainly involved a beaker and a turbine mixer. The sunflower contained in the glass beaker was heated up to 70 °C. While stirring with the 6 blades turbine stirrer at 600 rpm the monoglyceride phase was dissolved. After the dissolution was completed the fat phase was cooled down to 35 °C at continuous stirring. Once this temperature was reached the water was added slowly and emulsified. During the process of emulsification the stirrer speed was increased from the original 600 rpm to 1200 rpm. After a homogeneous emulsion was obtained further cooling to a temperature between 15 and 20 °C was performed. After an overall stirring time of 30 minutes the obtained emulsion was filled into glass cylinders.

The quality of the two products A and B was assessed in three aspects, appearance, pourability, and stability against oil or water separation. The appearance of the two products was judged to be excellent, no inhomogenities or other defects could be detected. Both products were after production stored at 15 °C. In terms of stability against phase separation product A developed in the course of the storage an oil layer at the top of the product. The oil layer accounted for 0.5 % of the product volume after 2 weeks of storage and for 1.0 % after for 4 weeks of storage at 15 °C. These values are so small that the oil exudation can not be considered a product defect. For product B which contains more stabilizing monoglycerides no oil separation was found in the course of the storage trial.

The pourability of the products was quantified with a so-called Bostwick apparatus. This is essentially a horizontal channel in which a sample can spread due to gravitational force. At one end of the channel 100 ml of product are confined behind a gate and at the begin of trial allowed to spread into the whole channel, by removal of the gate. The length in centimeters or surface the product covers after 15 seconds at a temperature of 15 °C is a measure for its pourability. A typical tub margarine will have a value of 0 cm. A low viscous liquid like water or oil will have the maximum value of 25 cm. The products A and B described here scored values of 10.5 cm and 8.5 cm respectively. This indicates clearly that stable products with liquid like behaviour have been obtained.

## Claims

1. Edible fat product consisting of a dispersion comprising a continuous fat phase, 10 to 90 wt.% of a dispersed phase and fatty acid monoglycerides, **characterised in that** the amount of fatty acid monoglycerides calculated on fat phase is 1.5 - 15 wt.%, with the proviso that the fat product contains less than 7 wt.% calculated on fat phase, of structuring triglycerides.

2. Edible fat product according to claim 1, wherein the amount of fatty acid monoglycerides is 2 to 10 wt.%, preferably 3 to 9 wt.%.

3. Edible fat product according to claim 1 or 2, wherein the fatty acid monoglycerides are monoglycerides esterified with a fatty acid selected from the group consisting of saturated fatty acids, preferably behenic, archidic, stearic, palmitic, myristic and lauric acid or unsaturated fatty acids, preferably oleic, linoleic, linolenic and erucic acid.

4. Edible fat product according to claim 3, wherein the fatty acid monoglycerides are monoglycerides esterified with saturated fatty acids.

5. Edible fat product according to claim 4, wherein the fatty acid monoglycerides are rich in stearic and/or palmitic acid.

6. Edible fat product according to any of the claims 1 to 5, wherein the fatty acid monoglycerides are distilled monoglycerides having a purity of at least 90 %.

7. Edible fat product according to any of claims 1 to 6, wherein the fat phase comprises a liquid oil chosen from the group consisting of sunflowerseed oil, groundnut oil, mustard oil, safflower oil, sesame oil, corn oil, soybean oil oil, rapeseed oil, cottonseed oil, linseed oil and olive oil or a mixture thereof.

8. Edible fat product according to any of the preceding claims, wherein the amount of structuring triglyceride fat is limited to less than 5 wt.%, preferably less than 2 wt.%, calculated on fat phase.

9. Edible fat product according to claim 8, wherein the amount of structuring triglycerides is less than the amount of monoglycerides.

10. Edible fat product according to any of claims 1 to 9, which is a water-in-oil emulsion consisting of an aqueous phase dispersed in the continuous fat phase.

11. Edible fat product according to claim 10, wherein the aqueous phase in the emulsion has a droplet size (D3.3) of less than 20 µm, preferentially less than 15 µm.

12. Process for the preparation of a fat product according to claim 10 or 11, comprising forming an emulsion of the fat phase, monoglycerides and aqueous phase and cooling the emulsion under sheared conditions.

13. Edible fat product according to any of claims 1 to 9, wherein the dispersed phase is a cooking ingredient.

14. Edible fat product according to claim 13, wherein the dispersed phase contains fat insoluble ingredients in particular flour, herbs, garlic, olives, peppers or onion.

15. Edible fat product according to claim 13 or 14, wherein the dispersed phase is an aqueous phase containing the cooking ingredient.

16. Edible fat product according to claim 15, wherein the ratio cooking ingredient to water is 1:9 to 9:1.

17. Edible fat product according to any of claims 1 to 9, wherein the dispersed phase contains fat insoluble health promoting ingredients.

18. Process for the preparation of an edible fat product according to any of claims 13 to 17, comprising mixing fat phase and monoglycerides at a temperature at which all components dissolve to obtain a clear fat phase, cooling the obtained fat phase under sheared conditions, wherein prior, during or after the cooling process the dispersed phase is added to the fat phase.

19. Use of a fatty acid monoglycerides for structuring the fat phase of an edible fat product consisting of a dispersion which comprises a liquid oil as continuous fat phase and 10-90 wt.% of a dispersed phase, wherein the amount of fatty acid monoglycerides calculated on fat phase is 1.5-15 wt.%, preferably 2-10 wt.%, more preferably 3-9 wt.%.
